# EUROPEAN PATENT APPLICATION

(11) **EP 4 174 145 A1**
(43) Date of publication of application: **03.05.2023**
(21) Application number: 21306509.7
(22) Date of filing: 28.10.2021
(51) Int. Cl.: C09D 11/17, C09D 11/18

(54) **WATER-BASED INK COMPRISING PARTICLES AND A LIPOPEPTIDE**

(71) Applicant: Société BIC, 92110 Clichy (FR)
(72) Inventor: SAUVAGE, Aurore, 92110 Clichy (FR)
(74) Representative: Peterreins Schley

(57) **Abstract**

The present disclosure relates to a writing instrument comprising a water-based ink composition, wherein the water-based ink composition comprises particles, wherein the particles have a D50 between about 1 to about 20 micrometers and a lipopeptide or salt thereof.

## Description

### Technical Field

The present invention relates to the field of writing instruments. More specifically, the present invention relates to writing instruments, comprising inks comprising particles and a lipopeptide.

### Background

A ballpoint pen is a writing instrument which features a tip that is automatically refreshed with ink. It consists of a precisely formed metal ball seated in a socket below a reservoir of ink. As the pen is moved along a writing surface, the ink is delivered onto the paper.

An ink for such a ballpoint pen must be suitably formulated. Inks are commonly gels, sols or solutions comprising at least one colorant. Conventional inks comprise a dye or pigment as colorant. A more recent alternative to the aforementioned inks are microencapsulated inks, i.e. inks which contain dyes or pigments within a shell of polymeric material. Microencapsulated inks form its own class of inks since the formulation challenges differ from conventional inks in that the microcapsules are typically much larger than conventional dyes and pigments and encapsulated in a polymeric shell material. This class of inks also offers new applications, for instance inks comprising microcapsules may be used to write on stone or synthetic paper, whereafter they may be easily erasable, more specifically with a damp cloth.

A further alternative are thermochromic inks. Thermochromic inks change their color or turn transparent based on a change of temperature. In particular, thermochromic inks may become transparent when rubbed with an eraser by frictional heat and may only return to a colored state when cooled, more specifically when cooled below ambient temperature, e.g. room temperature. Thermochromic inks may also be microencapsulated in microcapsules. The microcapsules, which may be viewed as particles of a certain size, comprise a wall material which surrounds a wax, a leuco dye and a developer. At first the wax is in a solid state and the leuco dye interacts with the developer and is in its colored state. When heat is applied the wax in the microcapsules melts and allows the leuco dye to no longer interact with the developer leading to discoloration of the leuco dye..

However, the use of microencapsulated inks may entail different problems compared to the use of conventional inks. The use of microencapsulated inks may decrease the smoothness of the writing. Further, the laydown may decrease and lines formed by the ballpoint pen may become irregular, more specifically incompletely filled, in particular, the lines may exhibit a blank space in the middle.

The present disclosure aims to address the aforementioned issues in optimizing writing ink formulations comprising particles in the micrometric size range.

### Summary

In a first aspect, the present disclosure relates to a writing instrument comprising a water-based ink composition, wherein the water-based ink composition comprises particles, wherein the particles have a D50 between about 1 to about 20 micrometers and a lipopeptide or salt thereof.

In some embodiments the particles may be microcapsules.

In some embodiments the particles may be dispersed in water and wherein the water may comprise the lipopeptide or salt thereof, in particular wherein the lipopeptide or salt thereof may be soluted in the water.

In some embodiments the lipopeptide may be a cyclic lipopeptide or salt thereof.

In some embodiments the lipopeptide may have a structure according to formula (I):

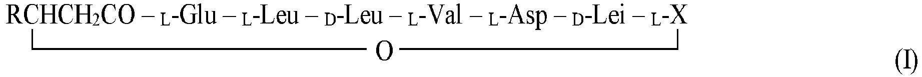

In some embodiments X may be selected from leucine, isoleucine, valine, glycine, serine, alanine, threonine, aspartic acid, glutamine, aspartic acid, glutamic acid, lysine, arginine, cysteine, methionine, phenylalanine, tyrosine, tryptophan, histidine, proline.

In some embodiments X may be selected from leucine, isoleucine or valine, and in particular leucine.

In some embodiments R may be selected from a linear or branched alkyl having between about 9 to about 13 carbon atoms, in particular an isoalkyl or anteisoalkyl having between about 9 to about 13 carbon atoms.

In some embodiments the lipopeptide may be in the form of a salt, wherein the lipopeptide according to formula (I) may comprise an alkali and/or earth alkali metal, more specifically sodium and/or potassium and in particular sodium.

In some embodiments the water-based ink composition may comprise between about 0.01 wt.% to about 5 wt.-%, more specifically between about 0.1 wt.-% to about 1 wt.-% and in particular between about 0.20 wt.-% to about 0.8 wt.-% of the lipopeptide, relative to the total weight of the water-based ink composition.

In some embodiments the water-based ink composition may comprise between about 5 wt.-% to about 40 wt.-%, more specifically between about 10 wt.-% to about 30 wt.-% and in particular between about 15 wt.-% to about 25 wt.-% of the particles, relative to the total weight of the ink.

In some embodiments the microcapsules may comprise a capsule wall.

In some embodiments the capsule wall may comprise melamine formaldehyde.

In some embodiments the capsule wall may comprise polyurea.

In some embodiments the microcapsules may comprise a colorant.

In some embodiments the colorant may be a dye.

In some embodiments the colorant may be a pigment.

In some embodiments the colorant may comprise a leuco dye and a developer.

In some embodiments the microcapsules may comprise a wax.

In some embodiments the water-based ink composition may exhibit shear thinning.

In some embodiments the water-based ink composition may have a dynamic viscosity of at least 700 mPa^{∗}s, more specifically at least 850 mPa^{∗}s and in particular at least 1000 mPa^{∗}s, at a shear rate of 1 s⁻¹.

In some embodiments the water-based ink composition may have a dynamic viscosity between about 10 mPa^{∗}s to about 300 mPa^{∗}s, more specifically between about 18 mPa^{∗}s to about 150 mPa^{∗}s and in particular between about 25 mPa^{∗}s to about 80 mPa^{∗}s, at a shear rate of 5000 s⁻¹.

In some embodiments the water-based ink furthermore may comprise a solvent, in particular water, a co-solvent, in particular glycerin and/or propylene-glycol, a gelling agent, a UV-absorber, a biocide, an anticorrosive, a wetting agent, a defoamer and/or a dispersing agent.

In some embodiments, the writing instrument may comprise a writing orifice and a writing ball disposed within the writing orifice.

In some embodiments, a gap may be disposed between the writing orifice and the writing ball, wherein the gap has a width of between about 10 µm to about 30 µm, more specifically between about 15 µm to about 25 µm and in particular between about 18 µm to about 22 µm.

In a second aspect, the present disclosure relates to an ink cartridge, comprising the water-based ink composition as defined in any of the previous embodiments.

In a third aspect, the present disclosure relates to a water-based ink composition as defined in any of the previous embodiments.

In a fourth aspect, the present disclosure relates to an ink concentrate comprising particles, wherein the particles have a D50 between about 1 to about 20 micrometers and a lipopeptide or salt thereof.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

The use of microencapsulated inks may entail different problems compared to the use of conventional inks. The use of microencapsulated inks may decrease the smoothness of the writing which may feel discomforting to the user and/or lead to uneven lines. Further, the laydown may decrease, and lines formed by the ballpoint pen may become irregular, more specifically incompletely filled, in particular, the lines may exhibit a blank space in the middle. It is believed these problems result from the increased particle size of the microcapsules compared to pigment- or dye-based inks. In particular, the increased particle size may result in an increased ink viscosity and/or decreased wettability of the ink. Surfactants may be used to improve the inks viscosity and/or wettability, however, these surfactants often require relatively high dosages which may for example discolor the ink or lead to foaming.

It has been surprisingly found that adding a lipopeptide to water-based inks compositions comprising particles having a size between about 1 to about 20 micrometers improves the writing performance of a writing instrument comprising such ink. In particular, the writing instrument can produce markings more smoothly and may provide a more regular writing, in particular such as more even lines. Further, the inks may exhibit less blank space in the middle. It has been found that the addition of the lipopeptide may decrease the viscosity of the ink, even at low concentrations.

Accordingly, in a first aspect, the present disclosure relates to a writing instrument comprising a water-based ink composition, wherein the water-based ink composition comprises particles, wherein the particles have a D50 between about 1 to about 20 micrometers and a lipopeptide or salt thereof.

The D50 is a well-known parameter and may be measured according to any suitable means. In some embodiments, the D50 may be measured by laser diffraction analysis, dynamic light scattering and/or imaging particle analysis. In particular, the D50 may be measured using a Mastersizer 3000E, sold by the company Malvern Panalytical GmbH, Kassel, Germany.

Conventional inks typically comprise pigments or dyes. Dyes are soluted in the inks carrier medium. Pigments comprised in conventional inks typically have a size in the nanometric range. Due to the pigments having a size in the nanometric range, the pigments may form a colloidal suspension in the carrier medium.

However, due to their size, larger particles, in particular microcapsules, having a D50 between about 1 to about 20 micrometers, may not form a colloidal suspension, but instead may form a coarse dispersion in the water-based ink's water. Coarse dispersions may also be referred to as a coarse dispersion suspensions. The coarse dispersion suspension may not as easily wet surfaces, e.g. a ball in a ballpoint-pen, compared to conventional inks. Further, a coarse dispersion suspension may exhibit a higher viscosity compared to a conventional inks.

Without wishing to be bound by theory - it is believed that the lipopeptide reduces the interfacial tension between the particles and the water, as well as between water molecules themselves. This may improve the wetting ability of the ink, which may thereby wet the writing tip, e.g. the writing ball in a ballpoint pen, more evenly. The ink coating the tip more evenly may lead to a smoother writing feeling and a more regular writing, in particular such as more even lines. Further, the lipopeptide may reduce the ink's viscosity, which may allow wetting the writing tip more evenly and/or increase the amount of ink dispensed by the writing instrument as it flows more easily out of the writing instrument.

In some embodiments, it may be particularly advantageous that the particles are microcapsules. In some embodiments the particles may be dispersed in water, wherein the water may comprise the lipopeptide or salt thereof, in particular wherein the lipopeptide or salt thereof may be soluted in the water. If the particles, in particular the microcapsules, comprise the lipopeptide this may not improve the writing properties of the ink, e.g. laydown and regularity, such as line evenness. It may be preferable that the water comprises the lipopeptide, as this may improve the writing properties of the ink, e.g. by reducing the surface tension. The particles, in particular the microcapsules, may also comprise part of the lipopeptide. This may for example occur unintentionally and/or unavoidably during the production process and/or during aging of the ink.

In some embodiments the lipopeptide may be a cyclic lipopeptide or salt thereof. The term "lipopeptide" within disclosure relates to its typical meaning in the art. The term "lipopeptide" may refer to fewer than ten amino acids linked by peptide bonds, wherein at least one amino acid is further linked to a lipid. The term "cyclic lipopeptide" within disclosure relates to its typical meaning in the art. In particular, the term "cyclic lipopeptide" may refer to a structure comprising a ring of fewer than ten amino acids linked by peptide bonds, wherein at least one amino acid further linked to a lipid. The term "lipid" within disclosure relates to its typical meaning in the art. The term " lipid" may refer to micro biomolecules soluble in nonpolar solvent. In particular, the term "lipid" may refer to biomolecules soluble in a non-polar solvent with a molecular weight below 2000 g/mol, more specifically below 1500 g/mol and in particular below 1500 g/mol. Examples for lipids are fatty acids, glycerolipids, glycerophosholipid, glycerophospholipids, sphingolipids, sterols and prenols. The peptide section may impart the lipopeptide with hydrophilic properties, whereas the lipid may impart the lipopeptide with hydrophobic properties.

Without wishing to be bound by theory - the lipopeptides or salts thereof, in particular the cyclic lipopeptides or salts thereof, may lower the water's surface tension by moving into the intermolecular space between water molecules. The presence of the cyclic lipopeptide in the intermolecular space between water molecules may decrease the attractive forces between the water molecules, in particular by preventing the formation of hydrogen bonds or by breaking these. Additionally or alternatively, again without wishing to be bound by theory, the lipopeptides or salts thereof, in particular the cyclic lipopeptides or salts thereof, may interact act as surfactants between the water and the particles, thereby allowing movement of the particles through the water under less stress and further, allow the movement of multiple particles past one another under less stress.

In some embodiments the lipopeptide may have a structure according to formula (I):

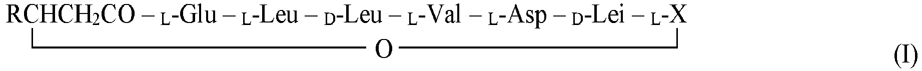

In some embodiments X may be selected from leucine, isoleucine, valine, glycine, serine, alanine, threonine, aspartic acid, glutamine, aspartic acid, glutamic acid, lysine, arginine, cysteine, methionine, phenylalanine, tyrosine, tryptophan, histidine, proline.

In some embodiments X may be selected from leucine, isoleucine or valine, and in particular leucine.

In some embodiments R may be selected from a linear or branched alkyl having between about 9 to about 13 carbon atoms, in particular an isoalkyl or anteisoalkyl having between about 9 to about 13 carbon atoms.

A molecule according to formula (I) wherein X is a leucine may be surfactin. Surfactin may be preferable, as it may be very efficient at improving the ink's wettability and/or reducing the inks viscosity. Further, surfactin may be relatively cheap compared to other lipopeptides, in particular other cyclic lipopeptides.

In some embodiments the lipopeptide may be in the form of a salt, wherein the lipopeptide according to formula (I) may comprise an alkali and/or earth alkali metal, more specifically sodium and/or potassium and in particular sodium. Salts of the lipopeptide may be more readily soluble in water, in particular sodium salts of the lipopeptide.

In some embodiments the water-based ink composition may comprise between about 0.01 wt.% to about 5 wt.-%, more specifically between about 0.1 wt.-% to about 1 wt.-% and in particular between about 0.20 wt.-% to about 0.8 wt.-% of the lipopeptide, relative to the total weight of the water-based ink composition. The lipopeptide may increase the wettability of the ink, in particular at lower concentrations compared to other surfactants. As mentioned above, the lipopeptide may decrease the viscosity of the ink, in particular at lower concentrations compared to other surfactants Higher amounts of surfactants may add undesirable properties to inks, for example discoloration of the ink and/or foaming of the ink.

In some embodiments the water-based ink composition may comprise between about 5 wt.-% to about 40 wt.-%, more specifically between about 10 wt.-% to about 30 wt.-% and in particular between about 15 wt.-% to about 25 wt.-% of the particles, relative to the total weight of the ink. An increased amount of particles may improve the color saturation of the ink. However, an increased amount of particles may also increase the water-based ink's viscosity and/or may reduce its wettability.

In some embodiments the particles may comprise a colorant. In particular, in some embodiments the microcapsules may comprise the colorant.

The term "colorant" within this disclosure may refer to its common meaning in the art. In particular, the term "colorant" may refer to a substance that imparts color. Additionally or alternatively, the term "colorant" may refer to a substance that is added to a material or composition to change the material's or composition's color. A composition may be for example the particles, microcapsules, and/or parts thereof.

As mentioned above, the particles may be microcapsules. The microcapsules may be substantially spherical. Different types of microcapsules may be used. Microcapsules may be distinguished for example into single-core, multi core and double-shell microcapsules. In some embodiments the microcapsules may comprise a capsule wall. Single-core microcapsules may comprise a core, wherein the core is enclosed by the capsule wall. The core may comprise the colorant. A multi-core microcapsule may comprise multiple cores enclosed by the capsule wall. Double-shell microcapsules may comprise a single core enclosed by a first capsule wall, wherein the first capsule wall is enclosed by a second capsule material.

In some embodiments the capsule wall may comprise melamine formaldehyde. The melamineformaldehyde resin may be for example Cymel 385, sold by the company Allnex, Frankfurt, Germany.

In some embodiments the capsule wall may comprise polyurea.

Furthermore, the particles may be microspheres. Microspheres may not comprise a capsule wall. Instead, microspheres may be solid spheres of substantially homogenous mixtures of a colorant with a sphere forming material, for example the polyurea or the melamine formaldehyde resin. Alternatively or additionally the sphere forming material, and thereby the microspheres, may comprise polyurethane, acrylic resin and/or polystyrene.

In some embodiments the colorant may be a dye. The term "dye" within this disclosure may refer to its common meaning in the art. In particular, the term "dye" may refer to a colored substance that is soluble in a wax.

In some embodiments the colorant may be a pigment. The term "pigment" within this disclosure may refer to its common meaning in the art. In particular, the term "pigment" may refer to a colored substance that is nearly or completely insoluble in water. Additionally or alternatively, the term "pigment" may refer to a colored substance that is nearly or completely insoluble in a wax. Pigments used as colorant typically exhibit a size between about 1 nm to about 500 nm.

In some embodiments the colorant may comprise a leuco dye. In some embodiments the colorant may comprise a leuco dye and a developer. The term "leuco dye" within this disclosure may refer to its common meaning in the art. In particular, the term "leuco dye" may refer to a substance which can switch between two chemical forms, wherein a first chemical form is colored and a second chemical form is colorless. The switch may be reversible or irreversible and may be caused by for example heat, light, a change in pH or a chemical reduction or oxidation. The switch may occur when the leuco dye reacts with the developer. The switch may also require multiple developers. For example, a leuco dye may be Blue 63, sold by the company Yamamoto Chemicals Inc, Japan and the corresponding developers may be BP C, sold by the company Mitsui Busan K.K., Tokyo, Japan and BP AF, sold by the company Mitsui Busan K.K., Tokyo, Japan.

In some embodiments the microcapsules may comprise a wax. The wax may undergo hysteresis. The term "hysteresis" within this disclosure may refer to its common meaning in the art. In particular, the term hysteresis may refer to a material property, wherein the material, e.g. wax, liquifies at a first temperature and resolidifies at a second temperature, wherein the first temperature is higher than the second temperature. A wax undergoing hysteresis may melt at temperature above room temperature, but only resolidify when cooled to a temperature substantially below room temperature. This may be preferable for example when using a leuco dye and developer, such that the ink may be discolored by heating the wax to a temperature above room to liquify the wax. When the wax undergoing hysteresis cools to room temperature it may still not solidify and the ink stays discolored. Only, when the wax is cooled to a temperature substantially below the room temperature it may resolidify, whereby the ink may recolor.

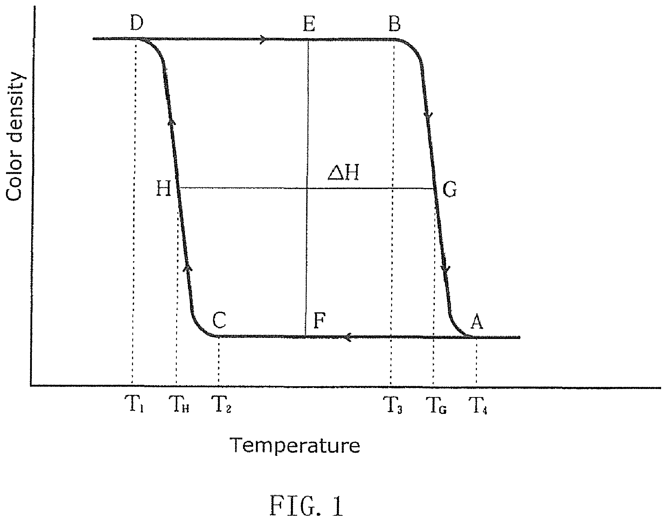

In FIG. 1, the color density of an ink comprising microcapsules comprising a leuco dye, a developer and a wax undergoing hysteresis is plotted on the ordinate and the temperature is plotted on the abscissa. A change in the color density due to temperature change occurs along the arrow. Here, "A" is a point which represents the density at a temperature T4 at which a completely decolored state is achieved (hereinafter, referred to as "complete decoloration temperature"); "B" is a point which represents the density at a temperature T3 at which a completely colored state can be maintained (hereinafter, referred to as "decoloration on-set temperature");"C" is a point which represents the density at a temperature T2 at which a completely decolored state can be maintained (hereinafter, referred to as "coloration on-set temperature"); and "D" is a point which represents the density at a temperature T1 at which a completely colored state is achieved (hereinafter, referred to as "complete coloration temperature").

The discoloration temperature region is a temperature region between T1 and T4, and the temperature region between T2 and T3 is a substantial discoloration temperature region, that is, a temperature region where either a colored state or a decolored state can be maintained.

Specifically, a change of the reversibly thermochromic microcapsule pigment from a decolored state to a colored state can be initiated by cooling the pigment to the coloration on-set temperature or lower. A completely colored state can be brought about by cooling the pigment to the complete coloration temperature or lower, and this state can be maintained unless the temperature of the reversibly thermochromic microcapsule pigment is increased to the decoloration on-set temperature.

Further, a change of the reversibly thermochromic microcapsule pigment from a colored state to a decolored state can be initiated by heating the pigment to the decoloration on-set temperature or higher with application of heat generated by friction or the like. A completely decolored state can be brought about by heating the pigment to the complete decoloration temperature or higher, and this state can be maintained unless the temperature of the reversibly thermochromic microcapsule pigment is decreased to the coloration on-set temperature.

The length of a line segment EF is a scale representing the contrast of discoloration, and the length of a line segment HG is a temperature width representing the degree of hysteresis (hereinafter, the hysteresis width is denoted as "ΔH"). The greater the ΔH value, the more easily the respective states before and after discoloration can be maintained.

The particles may comprise between about 50 wt.-% to about 90 wt.-%, more specifically between about 60 wt.-% to about 85 wt.-% and in particular between about 70 wt.-% to about 80 wt.-% of the wax, relative to the total weight of the particle. The term "wax," in the present disclosure is intended to be used as is well-established in the field of cosmetics and is, in particular, meant to refer to a lipophilic (fatty) compound with a reversible solid/liquid change of state.

Amongst the aforementioned waxes, the present disclosure relates to waxes a solubility water at about 25°C of less than about 1000 mg/L. During production of the particles, in particular during the production of the microcapsules, the wax may form a separate phase in water due to its water-insolubility. The wax may be combined with the colorant prior to manufacturing or mix with the colorant during production. The wax may then be enclosed by the capsule wall. Additionally or alternatively, the wax may be enclosed by pre-cursor substances which then cure and/or polymerize to form the capsule wall.

Alternatively, the wax may liquid at room temperature. In some embodiments, the wax may have a melting point range of between about -60°C and about 15°C, more specifically between about -50°C and about 5°C, and in particular between about -40°C and about -5°C. Waxes with a melting point below room temperature may be for example LX-50, sold by the company eastern petroleum private limited, Maharashtra, India and LX-100, sold by the company eastern petroleum private limited, Maharashtra, India.

In some embodiments the wax may have a melting point above room temperature. In some embodiments, the wax may have a melting point of at least about 35°C , more specifically at least about 40°C and in particular at least about 45°C. In some embodiments, the wax may have a melting point range of between about 40°C and about 120°C, more specifically between about 42°C and about 100°C, and in particular between about 45°C and about 80°C. A wax having a melting point above room temperature may be preferable when using a leuco dye and a developer as colorant. For example, the writing instrument may comprise the water-based ink with the leuco dye in its colored form. When the wax is solid the leuco dye interacts with the developer. When using the writing instrument the deposited ink forms colored markings. The user may erase the marking by rubbing the deposited ink. The rubbing may generate frictional heat which may melt the wax. When the wax is molten the leuco dye may not interact with the developer and discolor. Waxes with a melting point above room temperature may be for example octadecanol, methyl stearate, ethylene glycol distearate and Kerafine 58-60, sold by the company ADC solution, France, Kerafine 52-54, sold by the company ADC solution, France.

The method of measuring the melting point and/or melting point range of the wax is not particularly limited and may be measured using a differential scanning calorimeter (DSC), for example the calorimeter sold under the name DSC Q20 sold by the company TA Instruments .

The microcapsules may further comprise a microencapsulation aid. The microencapsulation aid may be comprised within the capsule wall, the core and/or at the interface of the capsule wall and core. The microencapsulation aid may improve the formation of an emulsion during the production process of the microcapsules. The microencapsulation aid may further improve the enclosure of the core by the capsule wall during the production process, in particular by reducing the surface tension between the wax and the capsule wall and/or the capsule wall's precursor.

In some embodiments the water-based ink composition may exhibit shear thinning. The term "shear thinning" within this disclosure may refer to its common meaning in the art. The term "shear thinning" may refer to a material property wherein a gel or fluid, e.g. a water-based ink, exhibits a non-Newtonian fluid behavior. In particular, the term "shear thinning" may refer to a material property wherein a gel or fluid exhibits a lower viscosity when exposed to shear strain. Shear thinning may be an advantageous material property for inks. For example, a shear thinning ink may be sufficiently viscous under no or little shear strain, such that it does not leak out of a ballpoint-pen. The ink's viscosity may decrease when exposed to shear strain by the ballpoint pen's ball moving, which may allow the ink to wet the ball and move out of the writing instrument.

In some embodiments the water-based ink composition may have a dynamic viscosity of at least 700 mPa^{∗}s, more specifically at least 850 mPa^{∗}s and in particular at least 1000 mPa^{∗}s, at a shear rate of 1 s⁻¹. The dynamic viscosity at a shear rate of 1 s⁻¹ of water-based ink compositions comprising the particles may be substantially higher than that of conventional inks. The high viscosity may reduce the wettability of the ink. The lipopeptide may reduce the dynamic viscosity at a shear rate of 1 s⁻¹ of the water-based ink.

In some embodiments the water-based ink composition may have a dynamic viscosity between about 10 mPa^{∗}s to about 300 mPa^{∗}s, more specifically between about 18 mPa^{∗}s to about 150 mPa^{∗}s and in particular between about 25 mPa^{∗}s to about 80 mPa^{∗}s, at a shear rate of 5000 s⁻¹. The dynamic viscosity of the ink at a shear rate of 5000 s⁻¹ may be substantially higher than that of conventional inks. The dynamic viscosity at increased shear rates may be indicative of the wetting properties of inks during the writing action. For example, when a ballpoint-pen is moved across the writing substrate, the ballpoint-pens ball may interact with the ink introducing it to increased shear rates. A higher dynamic viscosity of the ink at a shear rate of 5000 s⁻¹ may reduce the wettability of the ink. The lipopeptide may reduce the dynamic viscosity at a shear rate of 5000 s⁻¹ of the water-based ink.

In some embodiments the water-based ink furthermore may comprise a solvent, in particular water, a co-solvent, in particular glycerin and/or propylene-glycol, a gelling agent, a UV-absorber, a biocide, an anticorrosive, a wetting agent, a defoamer and/or a dispersing agent.

In some embodiments, the writing instrument may comprise a writing orifice and a writing ball disposed within the writing orifice. The writing ball may be configured to deposit the ink on a writing substrate. The writing ball may exert shear strain on the ink.

In some embodiments, a gap may be disposed between the writing orifice and the writing ball, wherein the gap has a width of between about 10 µm to about 30 µm, more specifically between about 15 µm to about 25 µm and in particular between about 18 µm to about 22 µm. The gap disposed between the writing orifice and the writing ball may more easily clog when an ink with a higher viscosity, interfacial tension and/or particles of greater size is used compared to conventional inks. Therefore, the gap may be designed to be larger than in conventional writing instruments, in particular in conventional ballpoint-pens.

In a second aspect, the present disclosure relates to an ink cartridge, comprising the water-based ink composition as defined in any of the previous embodiments.

In a third aspect, the present disclosure relates to a water-based ink composition as defined in any of the previous embodiments.

In a fourth aspect, the present disclosure relates to an ink concentrate comprising particles, wherein the particles have a D50 between about 1 to about 20 micrometers and a lipopeptide or salt thereof.

### Examples

The following two water-based ink compositions were prepared and tested.

**Table 1 Composition of Example 1 and the Comparative Example**

| Component | Example 1 Amount (wt.-%) | Comparative Example Amount (wt.-%) |
|---|---|---|
| Solvent Blue 104 | 1.10 | 1.10 |
| Methyl Stearate | 14.9 | 14.9 |
| Polyurea | 4 | 4 |
| Propylene Glycol | 10 | 10 |
| Microencapsulation Aid | 0.5 | 0.5 |
| Gelling Agent | 0.15 | 0.15 |
| Biocide+Anti-Corrosive+Defoamer | 0.59 | 0.59 |
| Wetting Agent | 0.8 | 0.8 |
| Hydropalat WE3488 | 0 | 2 |
| Surfactin (CAS Number 302993-83-1) | 0.25 | 0 |
| Demineralized Water | Rest | Rest |

The polyurea, methyl stearate and solvent blue 104 formed the microcapsules. The microcapsules accounted for 20 wt.-%, relative to the total weight of the ink composition.

### Preparation

The ink compositions were prepared by the following process. First an internal phase was produced. The methyl stearate was heated in a stirrer to 50 °C for liquification. Subsequently, the solvent blue 104 was added to the methyl stearate. The mixture was agitated until visibly homogenous.

For the preparation of an aqueous phase, the demineralized water was mixed with the microencapsulation aid. The mixture was heated to 70°C and agitated at a speed of 15 m/s for 30 minutes in an Ultra-Turrax Tube Drive P control sold by the company IKA-Werke GmbH & Co. KG, Staufen, Germany. Then the internal phase, still at a temperature of 50°C, was added to the aqueous phase. The temperature was set to 70°C and the mixture agitated at a speed of 15 m/s for 2 hours. Then the polyurea resin was added and the mixture stirred for 3 hours at 70°C. During the 3 hours the polyurea resin enclosed the internal phase, whereby the internal phase formed the core, and the polyurea polymerized to form the capsule wall. The resulting microcapsules in the water formed a slurry.

Subsequently, the gelling agent was added to the polypropylene under stirring at 15 m/s in an Ultra-Turrax Tube Drive P control sold by the company IKA-Werke GmbH & Co. KG, Staufen, Germany. To the mixture of polypropylene and the gelling agent the mixture of biocide, anticorrosive and defoamer, as well as the wetting agent were added and the mixture stirred for 15 minutes. Then the slurry was added to the mixture and the mixture again stirred for 15 minutes. Finally, the mixture was split into two parts. To the first part under stirring surfactin was added to arrive at the composition of Example 1. To the second part under stirring the Hydropalat WE3488 was added to arrive at the composition of the comparative example.

### Testing

The water-based ink compositions were tested for their dynamic viscosity at different shear rates. The tests were performed using a Kinexus Lab pro rheometer, by Netsch GmbH & Co. KG, Germany. The Kinexus Lab pro rheometer is a cone-plate rheometer. The tests were carried out at 20 °C. The angle between the cone and the surface was 1° and the diameter of the cone was 60 mm. The viscosity was then tested at a shear rate of 1 s⁻¹ and 5000 s⁻¹.

Further, the ink compositions were used in a writing instrument for a laydown test. The writing instrument comprised a Gel-Ocity ink cartridge, sold by the company BIC S.A., France. The writing instrument had a gap between the writing ball and the writing orifice with a width of 20 µm. The writing instrument was inserted into an automated writing device, weighed down with a weight of 55 mg, and used for writing a length of 100 m. The weight of the writing device before writing the 100 m and after writing the 100 m was recorded, the difference constitutes the laydown. The test was performed according to the standard ISO 27668-1:2017.

The results are presented in Table 2.

**Table 2 Results of Viscosity Tests and Laydown Tests**

| | Example 1 | Comparative Example |
|---|---|---|
| Viscosity at shear rate 1 s⁻¹ (mPa^{∗}s) | 1036 | 1267 |
| Viscosity at shear rate 5000 s⁻¹ (mPa^{∗}s) | 33.5 | 36.1 |
| Laydown (mg) | 327 | 269 |

The results of the tests show that the composition comprising the surfactin had a lower viscosity at both a shear rate of 1 s⁻¹ and 5000 s⁻¹ compared to the comparative example. Further, the laydown of the composition comprising the surfactin was increased compared to the comparative example.

The presented disclosure further relates to the following aspects.

### Aspects

1. A writing instrument comprising a water-based ink composition, wherein the water-based ink composition comprises:
   particles, wherein the particles have a D50 between about 1 to about 20 micrometers; and
   a lipopeptide or salt thereof.
2. The writing instrument according to aspect 1, wherein the particles are microcapsules.
3. The writing instrument according to any preceding aspect, wherein the particles are dispersed in water and wherein the water comprises the lipopeptide or salt thereof, in particular wherein the lipopeptide or salt thereof is soluted in the water.
4. The writing instrument according to any preceding aspect, wherein the lipopeptide is a cyclic lipopeptide or salt thereof.
5. The writing instrument according to any preceding aspect, wherein the lipopeptide has a structure according to formula (I): 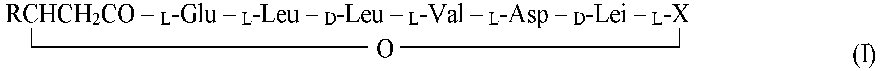
6. The writing instrument according to any preceding aspect, wherein X is selected from leucine, isoleucine, valine, glycine, serine, alanine, threonine, aspartic acid, glutamine, aspartic acid, glutamic acid, lysine, arginine, cysteine, methionine, phenylalanine, tyrosine, tryptophan, histidine, proline.
7. The writing instrument according to any preceding aspect, wherein X is selected from leucine, isoleucine or valine, and in particular leucine.
8. The writing instrument according to any preceding aspect, wherein R is selected from a linear or branched alkyl having between about 9 to about 13 carbon atoms, in particular an isoalkyl or anteisoalkyl having between about 9 to about 13 carbon atoms.
9. The writing instrument according to any preceding aspect, wherein the lipopeptide is in the form of a salt, wherein the lipopeptide according to formula (I) comprises an alkali and/or earth alkali metal, more specifically sodium and/or potassium and in particular sodium.
10. The writing instrument according to any preceding aspect, wherein the water-based ink composition comprises between about 0.01 wt.-% to about 5 wt.-%, more specifically between about 0.1 wt.-% to about 1 wt.-% and in particular between about 0.20 wt.-% to about 0.8 wt.-% of the lipopeptide, relative to the total weight of the water-based ink composition.
11. The writing instrument according to any preceding aspect, wherein the water-based ink composition comprises between about 5 wt.-% to about 40 wt.-%, more specifically between about 10 wt.-% to about 30 wt.-% and in particular between about 15 wt.-% to about 25 wt.-% of the particles, relative to the total weight of the ink.
12. The writing instrument according to any preceding aspect, wherein the microcapsules comprise a capsule wall.
13. The writing instrument according to any preceding aspect, wherein the capsule wall comprises melamine formaldehyde.
14. The writing instrument according to any preceding aspect, wherein the capsule wall comprises polyurea.
15. The writing instrument according to any preceding aspect, wherein the microcapsules comprise a colorant.
16. The writing instrument according to any preceding aspect, wherein the colorant is a dye.
17. The writing instrument according to any preceding aspect, wherein the colorant is a pigment.
18. The writing instrument according to any preceding aspect, wherein the microcapsules comprise a leuco dye and a developer.
19. The writing instrument according to any preceding aspect, wherein the microcapsules comprise a wax.
20. The writing instrument according to any preceding aspect, wherein the water-based ink composition exhibits shear-thinning.
21. The writing instrument according to any preceding aspect, wherein the water-based ink composition has a dynamic viscosity of at least 700 mPa^{∗}s, more specifically at least 850 mPa^{∗}s and in particular at least 1000 mPa^{∗}s, at a shear rate of 1 s⁻¹.
22. The writing instrument according to any preceding aspect, wherein the water-based ink composition has a dynamic viscosity between about 10 mPa^{∗}s to about 300 mPa^{∗}s, more specifically between about 18 mPa^{∗}s to about 150 mPa^{∗}s and in particular between about 25 mPa^{∗}s to about 80 mPa^{∗}s, at a shear rate of 5000 s⁻¹.
23. The writing instrument according to any preceding aspect, wherein the water-based ink furthermore comprises a solvent, in particular water, a co-solvent, in particular glycerin and/or propylene-glycol, a gelling agent, a UV-absorber, a biocide, an anticorrosive, a wetting agent, a defoamer and/or a dispersing agent.
24. The writing instrument according to any preceding aspect, wherein the writing instrument comprises a writing orifice and a writing ball disposed within the writing orifice.
25. The writing instrument according to any preceding aspect, wherein a gap is disposed between the writing orifice and the writing ball, wherein the gap has a width of between about 10 µm to about 30 µm, more specifically between about 15 µm to about 25 µm and in particular between about 18 µm to about 22 µm.
26. An ink cartridge, comprising the water-based ink composition as defined in any of aspects 1 to 23.
27. A water-based ink composition as defined in any of aspects 1 to 23.
28. An ink concentrate comprising:
   particles, wherein the particles have a D50 between about 1 to about 20 micrometers; and
   a lipopeptide or salt thereof.

## Claims

1. A writing instrument comprising a water-based ink composition, wherein the water-based ink composition comprises:
particles, wherein the particles have a D50 between about 1 to about 20 micrometers; and
a lipopeptide or salt thereof, more specifically an alkali and/or earth alkali metal, even more specifically sodium and/or potassium and in particular sodium.

2. The writing instrument according to claim 1, wherein the particles are microcapsules.

3. The writing instrument according to any preceding claim, wherein the lipopeptide is a cyclic lipopeptide or salt thereof.

4. The writing instrument according to any preceding claim, wherein the lipopeptide has a structure according to formula (I): 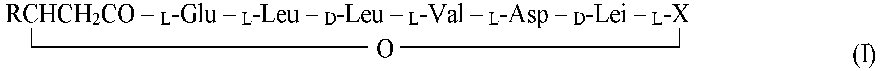
more specifically, wherein X is selected from leucine, isoleucine, valine, glycine, serine, alanine, threonine, aspartic acid, glutamine, aspartic acid, glutamic acid, lysine, arginine, cysteine, methionine, phenylalanine, tyrosine, tryptophan, histidine, proline, even more specifically from leucine, isoleucine or valine, and in particular leucine,
more specifically, wherein R is selected from a linear or branched alkyl having between about 9 to about 13 carbon atoms, in particular an isoalkyl or anteisoalkyl having between about 9 to about 13 carbon atoms.

5. The writing instrument according to any preceding claim, wherein the water-based ink composition comprises between about 0.01 wt.-% to about 5 wt.-%, more specifically between about 0.1 wt.-% to about 1 wt.-% and in particular between about 0.20 wt.-% to about 0.8 wt.-% of the lipopeptide, relative to the total weight of the water-based ink composition.

6. The writing instrument according to any preceding claim, wherein the water-based ink composition comprises between about 5 wt.-% to about 40 wt.-%, more specifically between about 10 wt.-% to about 30 wt.-% and in particular between about 15 wt.-% to about 25 wt.-% of the particles, relative to the total weight of the ink.

7. The writing instrument according to any preceding claim, wherein the microcapsules comprise a capsule wall, more specifically wherein the capsule wall comprises melamine formaldehyde and/or polyurea.

8. The writing instrument according to claim 7, wherein the microcapsules comprise a colorant, more specifically wherein the colorant is chosen from :
- dye, and/or
- pigment and/or
- a leuco dye and optionally a developer.

9. The writing instrument according to claim 7 or 8, wherein the microcapsules comprise a wax.

10. The writing instrument according to any preceding claim, wherein the water-based ink composition exhibits shear-thinning and/or wherein the water-based ink composition has a dynamic viscosity of at least 700 mPa^{∗}s, more specifically at least 850 mPa^{∗}s and in particular at least 1000 mPa^{∗}s, at a shear rate of 1 s⁻¹, and /or wherein the water-based ink composition has a dynamic viscosity between about 10 mPa^{∗}s to about 300 mPa^{∗}s, more specifically between about 18 mPa^{∗}s to about 150 mPa^{∗}s and in particular between about 25 mPa^{∗}s to about 80 mPa^{∗}s, at a shear rate of 5000 s⁻¹.

11. The writing instrument according to any preceding claim, wherein the water-based ink furthermore comprises a solvent, in particular water, a co-solvent, in particular glycerin and/or propylene-glycol, a gelling agent, a UV-absorber, a biocide, an anticorrosive, a wetting agent, a defoamer and/or a dispersing agent.

12. The writing instrument according to any preceding claim, wherein the writing instrument comprises a writing orifice and a writing ball disposed within the writing orifice, more specifically , wherein a gap is disposed between the writing orifice and the writing ball, wherein the gap has a width of between about 10 µm to about 30 µm, more specifically between about 15 µm to about 25 µm and in particular between about 18 µm to about 22 µm.

13. An ink cartridge, comprising the water-based ink composition as defined in any of claims 1 to 12.

14. A water-based ink composition as defined in any of claims 1 to 12.

15. An ink concentrate comprising:
particles, wherein the particles have a D50 between about 1 to about 20 micrometers; and
a lipopeptide or salt thereof.
